# EUROPEAN PATENT APPLICATION

(11) **EP 1 621 397 A1**
(43) Date of publication of application: **01.02.2006**
(21) Application number: 05015742.9
(22) Date of filing: 20.07.2005
(51) Int. Cl.: B60P 1/44

(54) **Loading platform for transport and lifting means**

(30) Priority: 27.07.2004 IT MI20041522
(71) Applicant: A.V.I. Accessori Veicoli Industriali S.R.L., 25030 Roncadelle BS (IT)
(72) Inventor: Giori, Paolo, 25030 Roncadelle (Prov. of Brescia) (IT)
(74) Representative: Modiano, Micaela Nadia

(57) **Abstract**

A loading platform (1) for transport or lifting means, comprising a deck body (2) constituted by a plurality of profiled elements (3) made of aluminum arranged mutually side by side and comprising mutual coupling means (10, 11) on which expansion means (55) act which can be arranged at the longitudinal edges for the mutual coupling of the profiled elements.

## Description

The present invention relates to a loading platform for transport and lifting means.

More particularly, the invention relates to a platform that can be used as a loading deck for vehicles adapted to carry people or goods and also for lifting and transport platforms for road and rail vehicles and aircraft.

As is known, the manufacture of loading platforms made of aluminum currently uses profiled elements which, due to constructive reasons, cannot be manufactured beyond a certain width; therefore, in order to obtain the platform, it is necessary to arrange a plurality of profiled elements side by side.

The profiled elements are joined by means of a weld, with a procedure that requires considerable working time and high energy consumption.

Another problem that can be ascribed to the solutions currently used consists in that the application of heat very often causes deformations on the part, and that it is further necessary to perform, after welding, an accurate cleaning of the part and possible retouches of the weld.

The aim of the invention is to solve the problems described above by providing a loading platform for transport and lifting means that allows to considerably simplify the operations for assembling and joining the various profiled elements, achieving a significant reduction of assembly times.

Within this aim, an object of the invention is to provide a platform that allows to achieve considerable energy saving by eliminating the energy consumption that occurred with welding.

Another object of the present invention is to provide a platform that has a higher mechanical strength than welded profiled elements, further obtaining a product of higher quality with significantly lower costs than the current one.

Another object of the invention is to provide a loading platform wherein, if parts of the platform are damaged it is possible to replace the damaged profiled element rapidly and easily.

Another object of the present invention is to provide a loading platform that thanks to its particular constructive characteristics is capable of giving the greatest assurances of reliability and safety in use.

This aim and these and other objects, which will become better apparent hereinafter, are achieved by a loading platform for transport or lifting means, according to the invention, which comprises a deck body constituted by a plurality of profiled elements made of aluminum arranged mutually side by side, characterized in that it comprises mutual coupling means on which expansion means act which can be arranged at the longitudinal edges for the mutual coupling of said profiled elements.

Further characteristics and advantages will become better apparent from the description of a preferred but not exclusive embodiment of a loading platform for transport and lifting means, illustrated by way of nonlimiting example in the accompanying drawings, wherein:

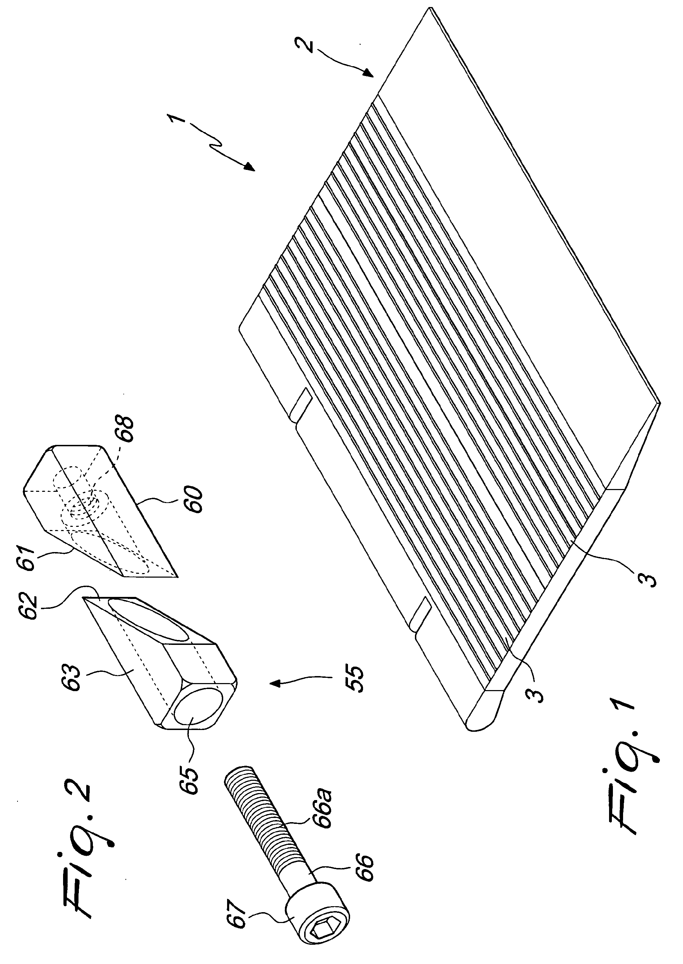

Figure 1 is a schematic perspective view of an embodiment of a loading platform according to the present invention;

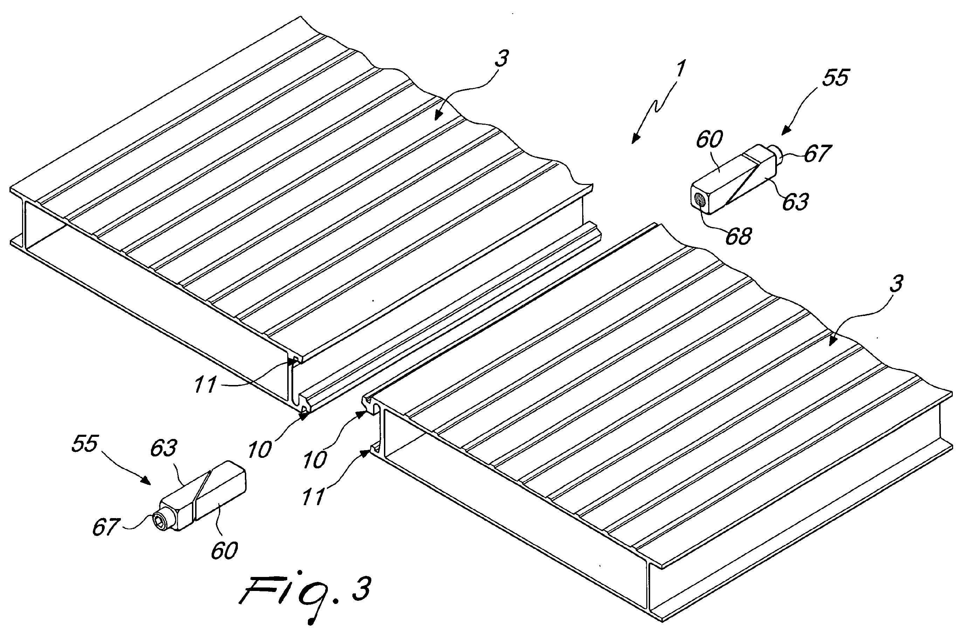

Figure 2 is an exploded perspective view of the expansion coupling means;
Figure 3 is an exploded view of two profiled elements arranged side by side, with the corresponding expansion coupling means;

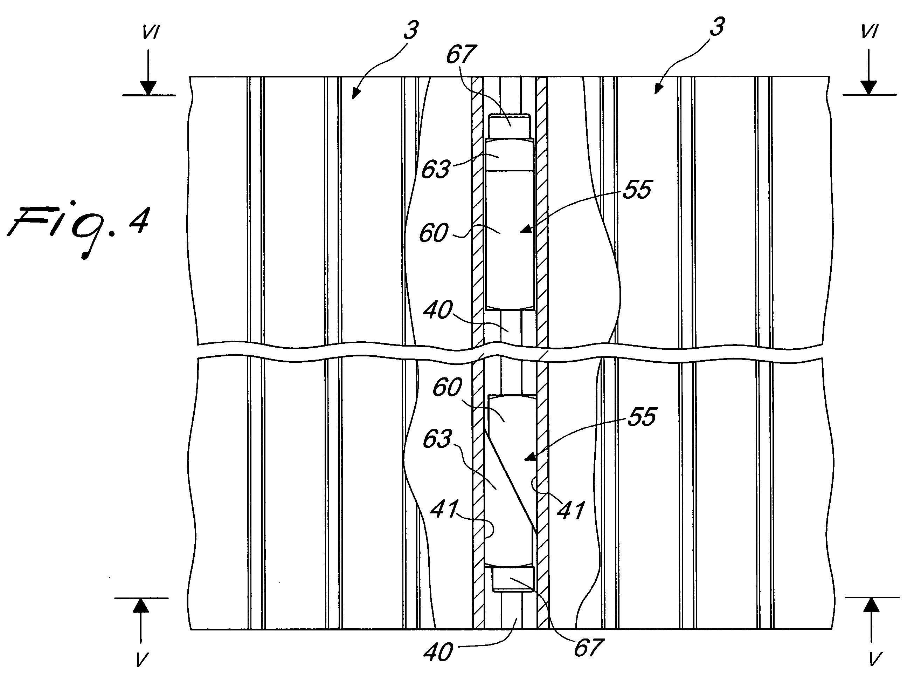

Figure 4 is a partially cutout view of two profiled elements arranged side by side, with the expansion coupling means;

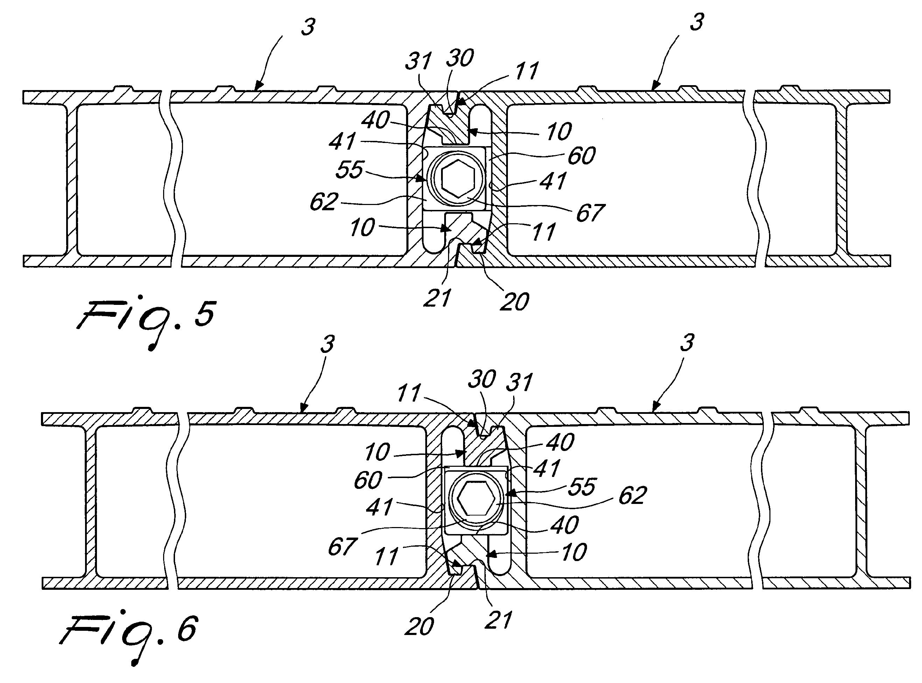

Figure 5 is a sectional view, taken along the line V-V of Figure 4;
Figure 6 is a sectional view, taken along the line VI-VI of Figure 4;

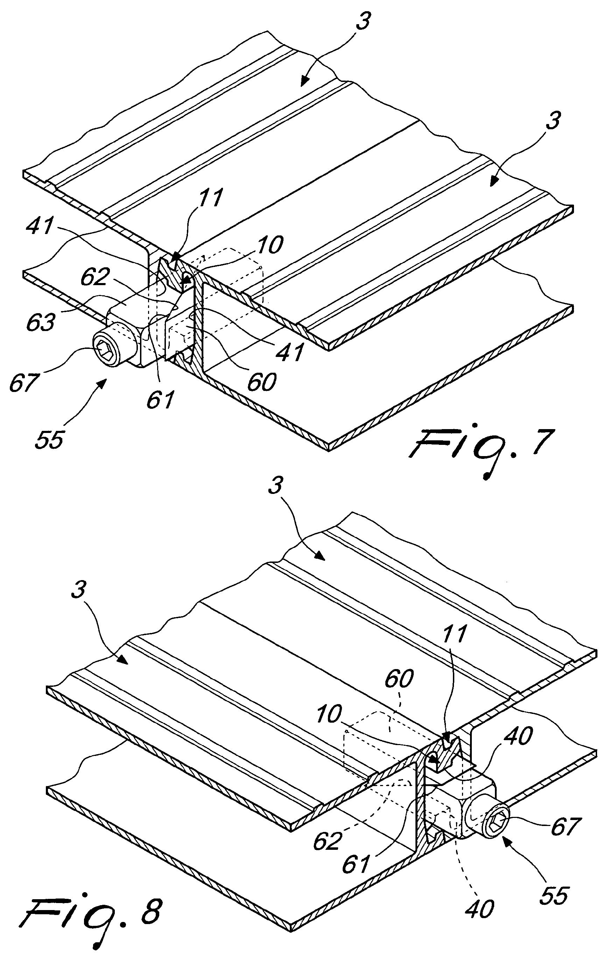

Figure 7 is a perspective view of the expansion coupling means that act laterally;
Figure 8 is a schematic perspective view of the expansion coupling means that act frontally;
Figure 9 is a schematic view of the continuous bar coupling means in the active condition;
Figure 10 is a side elevation view of an intermediate expansion element;
Figure 11 is an end view of the intermediate expansion element;
Figure 12 is a side elevation view of the expansion element, rested on one of its edges;
Figure 13 is a schematic perspective view of the intermediate expansion element and of an expansion tip;
Figure 14 is a schematic view of the continuous bar expansion coupling means in the active position;
Figure 15 is a transverse sectional view of the continuous bar coupling means in the inactive condition;
Figure 16 is a transverse sectional view of the continuous bar coupling means in the active condition.

With reference to the figures, the loading platform for transport and lifting means according to the invention, generally designated by the reference numeral 1, comprises a deck body 2, of a per se known shape and type, which is formed by a plurality of aluminum profiled elements 3, which have the usual box-like configuration and can have the dimensions deemed most appropriate.

The particularity of the invention consists in that each profiled element 3 forms, at its longitudinal edges, mutual coupling means, which are constituted by a male engagement element 10 and a female engagement element 11, which are arranged correspondingly at the longitudinal edges, so as to allow the mutual coupling of profiled elements having the same male and female engagement elements arranged side by side.

The male engagement element 10 forms an engagement tooth 20, flanked by a containment seat 21 which is open toward one face of the profiled element 3.

The female engagement element or seat 11 is provided at the opposite face of the profiled element 3 and is provided with a complementary engagement tooth 30, which is flanked by an engagement seat 31.

The engagement tooth and the complementary tooth mate with each other and are inserted respectively in the containment seat 21 and in the engagement seat 31.

The male engagement element is provided with a front abutment surface 40, while the lateral edge of the profiled element 3 has, between the male engagement element 10 and the female engagement element 11, a lateral abutment wall 41.

Two profiled elements, arranged so as to be mutually coupled, form between them a coupling channel 50, in which it is possible to insert expansion coupling means 55, advantageously provided by means of the prism-shaped block, preferably having a square end face, designated by the reference numeral 60, which forms at its end an inclined coupling surface for engagement with a complementary inclined surface 62 provided on a complementary prism-shaped block 63, preferably having a square end face, which forms a wider through seat 65 in which it is possible to insert a shank 66, provided with a thread 66a, of a fastening bolt 67, which mates in the threaded seat 68 formed by the block 60.

The expansion means are arranged so as to act both between the front abutment surfaces 40 and between the lateral abutment walls 41, thus achieving fastening along two mutually perpendicular directions.

Advantageously, in order to arrange the two profiled elements 3 so that they are adjacent at the ends of the channel 50, an expansion means 55 that acts between the lateral abutment surfaces is inserted at one side and an expansion coupling means 55 that acts between the front abutment surfaces is inserted at the other side, thus achieving firm locking, by mechanical action, of two aluminum profiled elements arranged side by side.

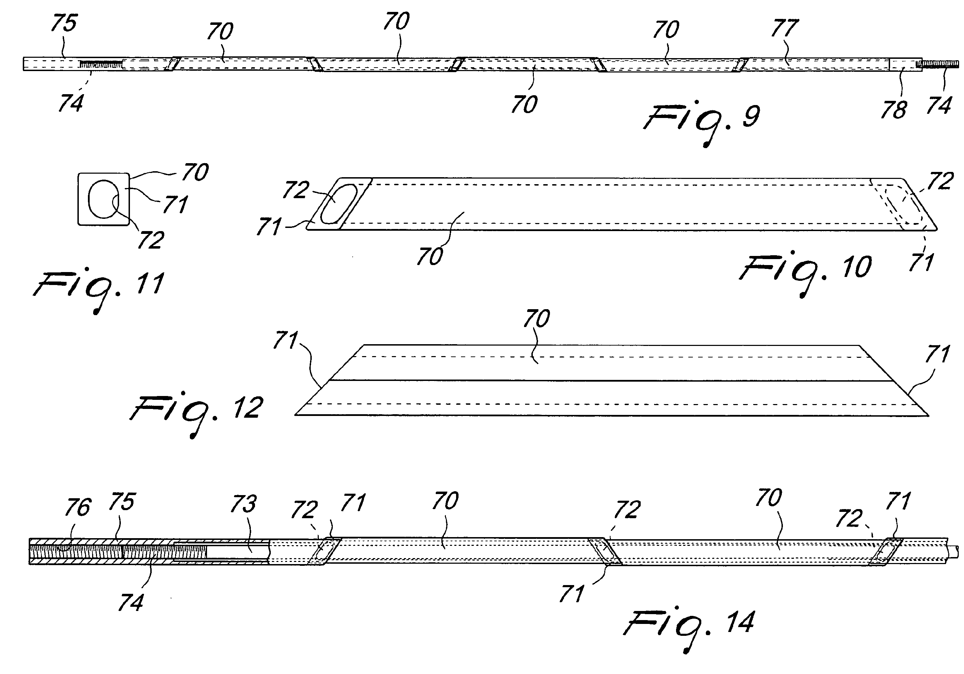

According to a different embodiment, which is shown specifically in Figures 9 to 16, the expansion means are provided with continuous bar coupling means, which can mutually fasten the profiled elements 3 arranged side by side at the entire extension of the coupling channel 50.

In this embodiment, the continuous bar coupling means are provided with intermediate expansion elements, designated by the reference numeral 70, which have, at their ends, bevels 71, which are preferably provided with an inclination of 45° with respect to a diagonal; the bevels at the mutually opposite ends of the intermediate element 70 have opposite inclinations, so as to define, in a side elevation view, a substantially trapezoidal shape for the element 70.

Each element 70 is provided internally with a wider channel, designated by the reference numeral 72, through which a locking bar 73 passes which has threaded ends 74.

In order to mutually fasten the intermediate locking elements, there is a first tip 75, provided with a threaded seat 76 and a single inclined end 71, its other end, which is arranged outwardly, being substantially perpendicular to its extension.

At the other end there is a second tip 77, which forms internally the through channel 72 and has an external end which is perpendicular to the axis against which a locking bush 78 acts, allowing to mutually fasten the various elements by outward expansion in order to provide locking.

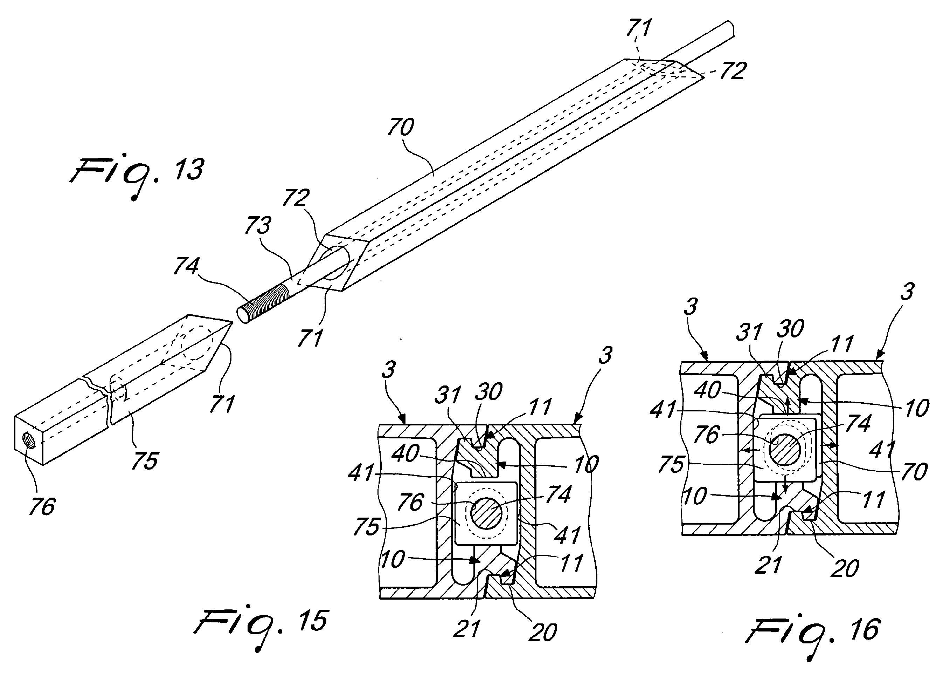

It should be noted that the inclination of the face 71 with respect to the diagonal causes the intermediate elements, which have a substantially square cross-section, by expanding outwardly, to act in practice on two mutually perpendicular faces, thus allowing to provide a particularly stable locking action, which acts in four directions, thanks to the fact that the laterally adjacent intermediate element is expanded so as to fasten at the remaining two perpendicular faces, as clearly shown schematically in Figure 16.

With the arrangement described above it is therefore possible to fasten the various profiled elements with a uniformly applied locking action.

It should be added to the above that it is optionally possible to provide intermediate elements with end faces which have mutually different inclinations, such as for example with inclinations of the end faces with respect to the sides that are arranged on contiguous faces, so as to produce a distribution of the generated thrusts.

With this arrangement, it is therefore possible to mutually fasten two profiled elements in order to obtain loading platforms particularly rapidly and without having to subsequently perform laborious and expensive finishing operations.

From what has been described above it is therefore evident that the invention achieves the proposed aim and objects, and in particular the fact is stressed that the particular structure that has been adopted allows to provide particularly precise and rapid fastening, which contributes to a significant reduction of production costs.

The invention thus conceived is susceptible of numerous modifications and variations, all of which are within the scope of the appended claims.

All the details may further be replaced with other technically equivalent ones.

In practice, the materials used, so long as they are compatible with the specific use, as well as the contingent shapes and dimensions, may be any according to requirements.

The disclosures in Italian Patent Application No. MI2004A001522 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A loading platform for transport or lifting means, comprising a deck body constituted by a plurality of profiled elements made of aluminum arranged mutually side by side, **characterized in that** it comprises mutual coupling means on which expansion means act which can be arranged at the longitudinal edges for the mutual coupling of said profiled elements.

2. The loading platform according to claim 1, **characterized in that** said mutual coupling means comprise a male engagement element and a female engagement element, which are arranged correspondingly at each longitudinal edge.

3. The loading platform according to the preceding claims, **characterized in that** said male engagement element is provided with an engagement tooth, which is flanked by a containment seat which is open toward one face of said profiled element, said female engagement element being provided at the opposite face of said profiled element and being provided with a complementary engagement tooth flanked by an engagement seat.

4. The loading platform according to one or more of the preceding claims, **characterized in that** said containment seat and said engagement seat, on the same edge of said profiled element, are open toward the same face of said profiled element.

5. The loading platform according to one or more of the preceding claims, **characterized in that** said male engagement element is provided with a front abutment surface.

6. The loading platform according to one or more of the preceding claims, **characterized in that** said profiled element has a lateral abutment wall at its longitudinal edges.

7. The loading platform according to one or more of the preceding claims, **characterized in that** two of said profiled elements arranged side by side form a coupling channel in which it is possible to insert said expansion coupling means.

8. The loading platform according to one or more of the preceding claims, **characterized in that** said expansion coupling means comprise a prism-shaped block which forms, at one of its ends, an inclined coupling surface for engagement with a complementary inclined surface formed on a complementary prism-shaped block, said complementary prism-shaped block forming a wider through seat in which it is possible to insert the shank of a locking bolt which mates within a threaded seat formed by said block.

9. The loading platform according to one or more of the preceding claims, **characterized in that** said expansion means are arranged so as to act both between said front abutment surfaces and between said lateral abutment walls.

10. The loading platform according to one or more of the preceding claims, **characterized in that** expansion means which act in two mutually perpendicular directions are provided in each one of said coupling channels.

11. The loading platform according to one or more of the preceding claims, **characterized in that** said expansion means comprise continuous bar coupling means, which act substantially at the entire region of the extension of said coupling channel of said profiled elements.

12. The loading platform according to one or more of the preceding claims, **characterized in that** said continuous bar coupling means comprise intermediate expansion elements, which have an elongated body which has a substantially square cross-section, said elements having, at their ends, bevels which are provided along a plane which is inclined with respect to a diagonal, the bevels at mutually opposite ends having mutually opposite inclinations, a wider channel for the passage of a fastening bar being provided axially within said intermediate elements.

13. The loading platform according to one or more of the preceding claims, **characterized in that** it comprises a first tip, which can be connected to a threaded end of said fastening bar, and a second tip, which can be connected to the other end and has one end provided with said bevel and the other end which abuts against a fastening bush, which acts on the threaded end of said fastening bar.

14. The loading platform according to one or more of the preceding claims, **characterized in that** said bevels are inclined substantially at 45° with respect to the longitudinal axis.

15. The loading platform according to one or more of the preceding claims, **characterized in that** upon fastening, said intermediate elements, by expanding outwardly, act with a fastening action on two mutually substantially perpendicular faces which are mutually opposite with respect to the two mutually substantially perpendicular faces on which the laterally adjacent intermediate element acts.

16. The loading platform according to one or more of the preceding claims, **characterized in that** it comprises intermediate elements which have, at their ends, inclined bevels which are arranged with mutually opposite inclinations on two contiguous faces, in order to distribute the fastening action.

17. A profiled element, particularly for providing loading platforms, **characterized in that** it comprises a box-like configuration which forms, at the longitudinal edges, mutual coupling means constituted by a male engagement element and a female engagement element for coupling with a laterally adjacent profiled element in order to form a coupling channel in which it is possible to insert expansion coupling means.

18. The profiled element according to claim 17, **characterized in that** said male engagement element comprises an engagement tooth, which is flanked by a containment seat and said female engagement element forms a complementary engagement tooth, which is flanked by an engagement seat.

19. The profiled element according to claims 17 and 18, **characterized in that** it comprises a front abutment surface, which is formed on said male engagement element, and a lateral abutment wall, which is formed at the lateral edge of the profiled element.
